# EUROPEAN PATENT APPLICATION

(11) **EP 0 719 629 A2**
(43) Date of publication of application: **03.07.1996**
(21) Application number: 95120348.8
(22) Date of filing: 21.12.1995
(51) Int. Cl.: B29C 45/27, B29C 45/38

(54) **Injection mold for PVC allowing easy detachment of plug from molded piece**

(30) Priority: 23.12.1994 IT GE940143
(71) Applicant: TECNO PLASTIC S.r.l., I-16012 Busalla (Genova) (IT)
(72) Inventor: Tubaro, Bruno, I-16030 - Sori, Genova (IT)
(74) Representative: Porsia, Bruno

(57) **Abstract**

The invention relates to an injection die for the moulding of rigid PVC, which can be used in particular, in a systematic manner, in the sector of moulding tubular pressure-connections and valve components, even those of great thickness, and is capable of bringing about the automatic detachment of the finished piece from the plug, with intrinsic possibilities in the form of qualitatively improving the moulded product. The die according to the invention is of the cold-duct type, the injection duct (1) of which, associated with a cavity (2) of the die (S), has a constriction (4) at its mouth into said cavity (2). Said constriction (4) of the injection duct (1) is provided as close as possible to the cavity (2) of the die and is connected by means of a flared pipe (6) to this cavity, while it is dimensioned so as to give rise, between the moulded piece and the solidified plug in the injection pipe (1), to a zone of attachment which is so narrow as to allow the easy detachment of said plug from the moulded piece through the effect of simple falling at the end of the moulding phase.

## Description

The invention relates to injection dies for plastic materials, in particular to so-called cold-duct injection dies, that is to say those in which the duct or ducts for injection of the plastic material into the cavity or cavities of the die are not specially heated. The invention relates in particular to the injection dies of the abovementioned type intended for the injection moulding of rigid PVC, for the production of objects having in general a relatively great wall thickness, for example at least of the order of 3 mm, and in particular for the injection moulding in PVC of tubular connections and of valve components, intended to work under pressure. The invention is not, however, limited necessarily and exclusively to PVC and to the abovementioned field of application, but can be used in all cases in which similar conditions and/or problems exist, including the possibility of also using the same type of die for injecting materials different from rigid PVC using the same type of injection which does not prejudice but in fact can improve the characteristics of the moulded piece as will be clearer from the descriptions which follow.

In previously known injection dies of the abovementioned type for rigid PVC and in particular in the field of application of tubular connections and of valve components, the injection duct, while being provided with a constriction at its mouth into the corresponding cavity of the die, had at the point of injection a mouth opening into the cavity of the die, dimensioned with size which is very wide, for example with a diameter or size of the corresponding opening surface of the order of size between 5 and 25 mm approximately, according to the size and thickness of wall of the piece to be moulded, as such width was considered absolutely necessary by experts in the field to guarantee a uniform entry of the molten PVC into the cavity of the die and to avoid aesthetic defects in the moulded piece around the point of injection. However, this wide mouth of the duct for injection into the cavity of the die gave rise to a range of disadvantages, in particular also that of giving rise to a correspondingly wide cross-section of the point of attachment between the moulded piece and the so-called plug or head constituted by the solidified plastic material in the injection duct. As a result of this great thickness of the root of attachment of the injection plug to the moulded piece, in particular in the case of the pieces of PVC, it was necessary to detach the injection plug from the moulded piece by means of a suitable cutting operation which required labour and time and consequently increased the production costs.

The aim of the invention is to eliminate the abovementioned disadvantages and consists essentially in that the constriction at the mouth of the duct for injection into the cavity of the die is provided as close as possible to the cavity of the die and is connected by means of a flaring to this cavity, while it is dimensioned so as to give rise, between the moulded piece and the solidified plug in the injection duct, to a zone of attachment which is so narrow as to allow the detachment of the plug from the moulded piece through the effect of simple falling or by manual action without tools.

The invention is based on the recognition that by making the injection duct communicate with the cavity of the die by means of a constriction which is provided as close as possible to the cavity of the die and has a flaring, that is to say a successive widening, towards the cavity of the die, the passage cross-section in the region of said constriction can be reduced - even and in particular in the case of injection of rigid PVC and also in a surprising manner and contrary to what was previously considered possible by the experts in the field - to such an extent as to ensure on the one hand a uniform inward flow of the molten PVC into the cavity of the die, without aesthetic defects in the region of the point of injection, and to give rise on the other hand to a zone of attachment which is so constricted, so restricted, between the moulded piece and the plug constituted by the solidified plastic material in the injection duct, that this plug can be separated from the moulded piece without particular working or tools, but by simple falling of the cluster consisting of the head and of the moulded pieces from the respective die or by simple manual detachment.

The fact that the constriction of the injection duct is arranged as close as possible to the cavity of the die guarantees moreover the pressure-tightness of the cavity in time, while the fact that the constriction of the injection duct has a successive flaring towards the cavity of the die, apart from giving rise to a diffusing effect which avoids the formation of aesthetic defects around the point of injection, reduces the times of post-pressure necessary to prevent the return of the injected plastic material during moulding, thus allowing further advantages in terms of reduction of the moulding times, but in particular in terms of greater facility of definition of the post-pressure time with consequent greater facility of obtaining moulded pieces of uniform quality. Moreover, the point of injection thus produced forces all the mass injected to be drawn through a relatively small hole, so as to impart to the same, by means of an increase by friction of the temperature, a greater qualitative uniformity of all the molten mass with consequent positive results on the mechanical qualities of the product made.

These and other characteristics of the invention and the advantages which derive therefrom will appear in greater detail from the following description of a preferred embodiment, illustrated by way of non-limiting example in the attached drawings, in which:

Fig. 1 illustrates in section an injection die for plastic materials, improved according to the invention.

Fig. 2 illustrates in section and on an enlarged scale the mouth zone of a duct for injection into the corresponding cavity of the injection die according to Fig. 1.

Fig. 3 illustrates a view on an enlarged scale of the zone of attachment between the injection plug and a moulded piece with the die according to Figs 1 and 2.

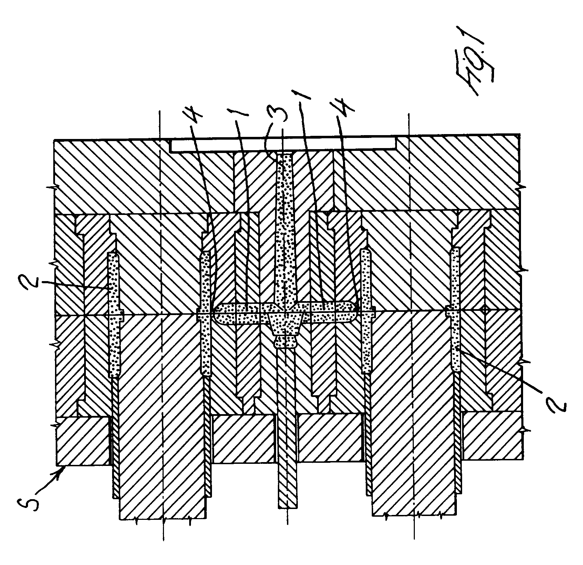

Fig. 1 illustrates in section a part of an injection die S for plastic materials, in particular for couplings made of PVC. This die S is universally known per se to experts in the field, as a result of which it will not be described in all its details. For the purposes of the invention, it is important that said injection die is of the cold-duct type, that is to say the injection ducts 1 which open into the cavity 2 of the die S are not specially heated. 3 indicates the duct for feeding the molten plastic material into the injection ducts 1 themselves. In Fig. 1, the cavities 2, the injection ducts 1 and the feed duct 3 are illustrated full of plastic material, for example at the end of the injection process, this plastic material being indicated by dots. The injection die S has - in the exemplary embodiment illustrated - two cavities 2. The invention can, however, be applied to any other injection dies, with more than two cavities and at worst even with a single cavity, even if this is hardly ever convenient.

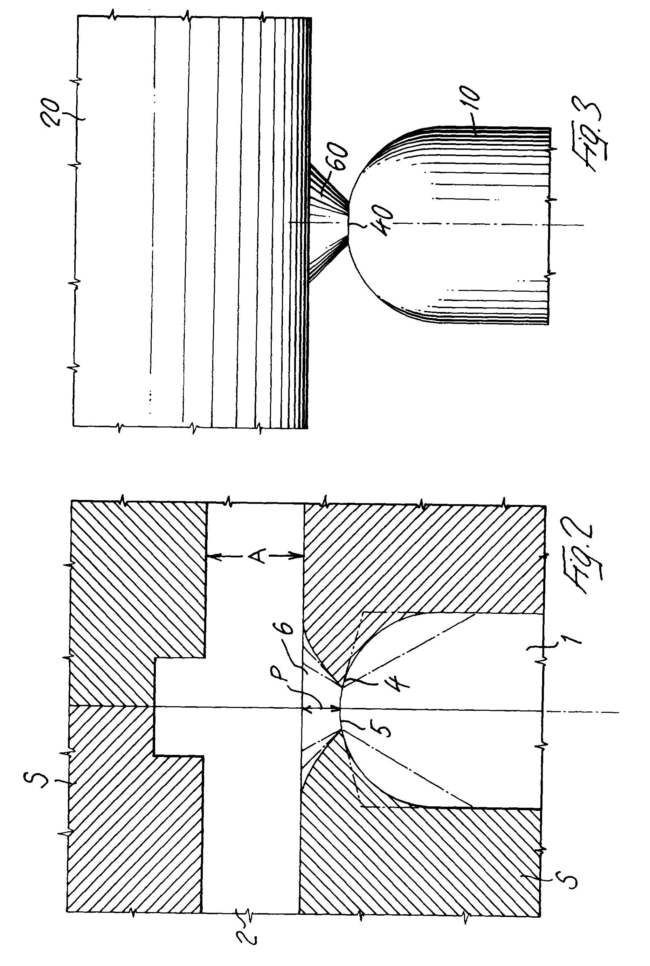

Each injection duct 1 can have any diameter capable of conveying the molten plastic material in the best manner desired as far as its mouth into the respective cavity 2 of the die. According to the invention, and in particular in the injection moulding of objects made of PVC, the injection duct 1 has a constriction 4 in the region of its mouth into the cavity 2 of the die, which constriction defines an opening 5 of diameter corresponding to a fraction of that of the injection duct 1, for example corresponding to 1/2 - 1/6 of the diameter of the duct 1 itself. This constriction 4 can be obtained with a tapering according to a curved and directed generatrix (as an arc of a circle, helix, parabola, hyperbole or similar) of the injection duct 1, as illustrated with solid lines in Fig. 2, or with a more or less gradual conical tapering of the injection duct 1 itself, as illustrated by lines with a dot and dash pattern in Fig. 2. The constriction 4 can, however, also be obtained with a more or less abrupt conical tapering of the injection duct, as illustrated with lines with a pattern of two dots and a dash in Fig. 2 itself.

The constriction 4 is provided as close as possible to the associated cavity 2 of the die, that is to say as close to this cavity 2 as allowed by the mechanical requirements of workability and of strength of the material of the respective part of the die S. Between the opening 5 obtained with the constriction 4 of the injection duct 1 and the respective cavity 2 of the die S there exists therefore a wall, the thickness P of which must be the minimum possible as far as the above mechanical requirements allow.

Downstream of the opening 5 brought about by the constriction 4 in the direction of flow of the plastic material entering into the cavity 2, that is to say on the side facing the cavity 2 itself, the mouth of the duct for injection 1 into the associated cavity 2 has a flaring 6, that is to say a short coaxial pipe which widens towards the cavity 2 and opens into the same through the thickness P of the wall which separates this cavity 2 from the injection duct 1. This flaring 6 can be conical, more or less open, that is to say bell-shaped, as indicated by lines with a dot and dash pattern in Fig. 2, or can be delimited by a curved and directed generatrix (as an arc of a circle, helix, parabola, hyperbole or similar), as illustrated with solid lines in Fig. 2.

Preferably, according to a further characteristic of the invention, the edge of the opening 5 obtained with the constriction 4 of the injection duct is constituted by a sharp corner, that is to say the surface which delimits the flaring 6 and the surface of the tapered end part of the injection duct form between them an angle, preferably but not necessarily an acute angle, in the region of the edge of the opening 5.

The dimensions of the various parts of the mouth described above of the duct for injection 1 into the associated cavity 2 of the die, and also the dimensional relationships between them, can vary within wide limits, in particular according to the volume of the rigid PVC, or similar, to be injected and according to the thickness A of the wall of the moulded piece 20. In a preferred exemplary embodiment, in the case of injection moulding of PVC and when the moulded piece 20 is constituted by a coupling connection, or similar, the wall of which has a thickness A of between approximately 3 and 15 mm, the opening 5 obtained with the constriction 4 of the injection duct has a diameter from 1.5 to 5 mm approximately, while the diameter of the injection duct corresponds to approximately 4-5 times the diameter of said opening 5. The thickness P of the wall which divides the injection duct 1 from the respective cavity 2 of the die S in the region of the constricted mouth of this duct of said cavity 2 itself corresponds approximately to at least 2/3 of the diameter of said opening 5, and the radius of the curved generatrix of the flaring 6 also corresponds to this diameter. The generatrix, curved or rectilinear (conical), of this flaring 6 can be inclined in relation to the axis of the injection duct 1 by an angle of between 15° and 60°, preferably by an angle of approximately 45°.

With the injection die S described above according to the invention a moulded piece 20, in particular made of PVC, is obtained, which is connected to the plug 10 constituted by the solidified plastic material in the injection duct 1 by means of a short button 60 which is essentially frustoconical and corresponds to the flaring 6 of the constricted mouth of the duct for injection 1 into the cavity 2 of the die S, essentially as illustrated in Fig. 3. The connection 40 of this button 60 to the plug 10 corresponds to the opening 5 obtained with the constriction 4 and is, however, so narrow that it breaks in a regular and constant manner in general just through the effect of the simple falling of the moulded piece 20 when the die S is opened, and in any case with a simple manual action, without special intervention with tools or utensils. The moulded piece 20 is thus separated with maximum rapidity and facility from the injection plug 10 and there remains on this only-the small, essentially frustoconical, button 60 which does not normally give rise to any interference. Nevertheless, by virtue of the flaring 6 and the diffusing effect of the same, and also by virtue of the proximity of the constriction 4 to the respective cavity 2 of the die S, the entry of the flow of molten PVC into said cavity 2 takes place in a uniform manner and yet so as to avoid aesthetic defects in the PVC around the point of injection, that is to say at the button 60.

The invention is of course not limited to the exemplary embodiments described and illustrated above, but can be widely varied and modified without departing from the general idea. Thus, for example, the corner of the opening 5 formed by the constriction 4 at the mouth of the duct for injection 1 into the cavity 2 of the injection die, while being preferably sharp and/or having in diametral section a perferably acute angle, can also be - for requirements of greater duration - slightly rounded and/or can correspond to an angle smaller or greater than 90°. Moreover, the injection can be applied to any type of cold-duct injection dies, even so-called third plate dies, irrespective of their construction. The automatic detachment of the moulded pieces from the head and from the corresponding plugs by simple falling from the die is guaranteed with greater certainty in the case of pieces made of rigid PVC and having a high weight/volume ratio which ensures on falling an impact force capable of breaking the connection to the plug. The invention is therefore particularly suitable for being applied in the field of moulded pieces which have a considerable wall thickness, for example a thickness of at least 3 mm, and is also applied with special advantages in the field of injection moulding in rigid PVC of tubular pressure-connections and of valve components, overcoming the prejudices and disadvantages which have existed until now in this field and obtaining considerable advantages in economic terms with lower finishing costs of the products, and in qualitative terms with a greater possibility of obtaining a uniform product with optimum mechanical characteristics, in the majority of PVC pressure-connections currently on the market.

## Claims

1. Injection die for plastic materials, in particular for rigid PVC or similar, to be used for the injection moulding of pieces having a high weight/volume ratio and/or a wall thickness of at least 3 mm, such as tubular pressure-connections and valve components, in particular a cold-duct injection die, with one or more cavities, and in which the injection duct (1) associated with a cavity (2) of the die (S) and having a diameter best adapted to the normal feed of the rigid PVC, has at its mouth into the cavity (2) of the die a constriction (4), characterized in that the constriction (4) of the injection duct (1) is provided as close as possible to the cavity (2) of the die and is connected by means of a flared pipe (6) to this cavity (2), while it is dimensioned so as to give rise, between the moulded piece (20) and the solidified plug (10) in the injection duct (1), to a zone of attachment (40) which is so narrow as to allow the easy detachment of the plug (10) from the piece (20), without working by means of tools or utensils, or by simple manual action, but more advantageously following the falling from the die (S) of the cluster constituted by the moulded piece or pieces and by the respective plugs and heads.

2. Die according to Claim 1, characterized in that the constriction (4) is formed by a directed and gradual narrowing, in particular conical or with a curved generatrix, of the injection duct (1).

3. Die according to Claim 1, characterized in that the constriction (4) is formed by a more or less abrupt narrowing of the injection duct (1), in particular by a slightly conical internal step of said duct or by a step formed by a curved generatrix, connected in a directed manner to the remaining cylindrical surface of the injection duct.

4. Die according to any one or more of the preceding claims, characterized in that the flared pipe (6) is conical or is formed by a curved generatrix, or is conical with a curved connection at the bottom which joins the cone to the cavity.

5. Die according to any one or more of the preceding claims, characterized in that the surface, conical or curved, which delimits the flared pipe (6) and the surface, conical or curved, which delimits the tapered end of the injection duct (1) form between them a preferably acute angle in the region of the edge of the opening (5) defined by the constriction (4).

6. Die according to any one or more of the preceding claims, characterized in that the edge of the opening (5) defined by the constriction (4) is constituted by a sharp corner.

7. Die according to any one or more of the preceding claims, characterized in that, in particular for the injection moulding of rigid PVC, or similar, and in particular of tubular pressure-connections or of valve components, and when the moulded piece (20) has a wall thickness between approximately 3 and 15 mm, the opening (5) obtained with the constriction (4) of the injection duct (1) has a diameter from 1.5 to 5 mm approximately, while the diameter of the injection duct (1) corresponds to approximately 4-5 times the diameter of said opening (5).

8. Die according to Claim 7, characterized in that the thickness (P) of the wall which divides the constricted end of the injection duct (1) from the cavity (2) of the die (S) corresponds at least approximately to 2/3 of the diameter of the opening (5) obtained with the constriction (4).

9. Die according to Claim 7 or 8, characterized in that the flared pipe (6) following the constriction (4) ends at its base with a connection, between the pipe itself and the wall of the cavity (2), the radius of which corresponds at least approximately to the diameter of the opening (5) formed by the constriction (4).

10. Die according to any one or more of the preceding claims, characterized in that the generatrix, curved or rectilinear (conical), of the flared pipe (6) following the constriction (4) is inclined in relation to the axis of the injection duct by an angle of between 15° and 60° and corresponding preferably to 45°.
